# EUROPEAN PATENT SPECIFICATION

(11) **EP 1 655 886 B1**
(45) Date of publication and mention of the grant of the patent: **10.09.2008**
(21) Application number: 04762063.8
(22) Date of filing: 10.08.2004
(51) Int. Cl.: H04L 12/00, H04L 12/56

(54) **A METHOD FOR PROCESSING A REQUEST TO CREATE THE PACKET DATA PROTOCOL CONTEXT**
VERFAHREN ZUM VERARBEITEN EINER ANFORDERUNG, DEN PAKETDATEN-PROTOKOLL-KONTEXT ZU ERZEUGEN
PROCEDE DE TRAITEMENT D'UNE DEMANDE DE CREATION DU CONTEXTE DE PROTOCOLE DE PAQUET DE DONNEES

(30) Priority: 15.08.2003 CN 03153614
(43) Date of publication of application: 10.05.2006
(73) Proprietor: Huawei Technologies Co., Ltd., Longgang District, Shenzhen, Guangdong 518129 (CN)
(72) Inventor: WU, Yajuan Huawei Administration Building, Shenzhen Guangdong 518129 (CN)
(74) Representative: Skuhra, Udo
(86) International application number: PCT/CN2004/000927
(87) International publication number: WO 2005/069536

(56) References cited:
- WO-A1-02/41592
- WO-A1-03/065680
- CN-A- 1 434 612
- KR-A- 20020 051 559
- KR-A- 20020 083 253
- US-A1- 2003 153 296
- "Digital cellular telecommunications system (Phase 2+); Universal Mobile Telecommunications System (UMTS); General Packet Radio Service (GPRS); GPRS Tunnelling Protocol (GTP) across the Gn and Gp interface (3GPP TS 29.060 version 4.8.0 Release 4); ETSI TS 129 060" ETSI STANDARDS, EUROPEAN TELECOMMUNICATIONS STANDARDS INSTITUTE, SOPHIA-ANTIPO, FR, vol. 3-CN2;3-CN4, no. V480, June 2003 (2003-06), XP014017190 ISSN: 0000-0001
- "Digital cellular telecommunications system (Phase 2+); General Packet Radio Service (GPRS); GPRS Tunnelling Protocol (GTP) across the Gn and Gp Interface; (GSM 09.60 proposed version 1.4.0); DraftTS 100 960 proposed" ETSI STANDARDS, EUROPEAN TELECOMMUNICATIONS STANDARDS INSTITUTE, SOPHIA-ANTIPO, FR, no. V140, November 1997 (1997-11), XP014022089 ISSN: 0000-0001

## Description

### Field of the Technology

The present invention relates to the Packet Data Protocol (PDP) context in Universal Mobile Telecommunications System (UMTS), and more particularly to a method for processing Create PDP Context Request.

### Background of the Invention

Universal Mobile Telecommunications System (UMTS) is a 3G mobile communications system based on the Wideband Code Division Multiple Access (WCDMA) air interface technology, and the UMTS is generally called the WCDMA communications system as well.

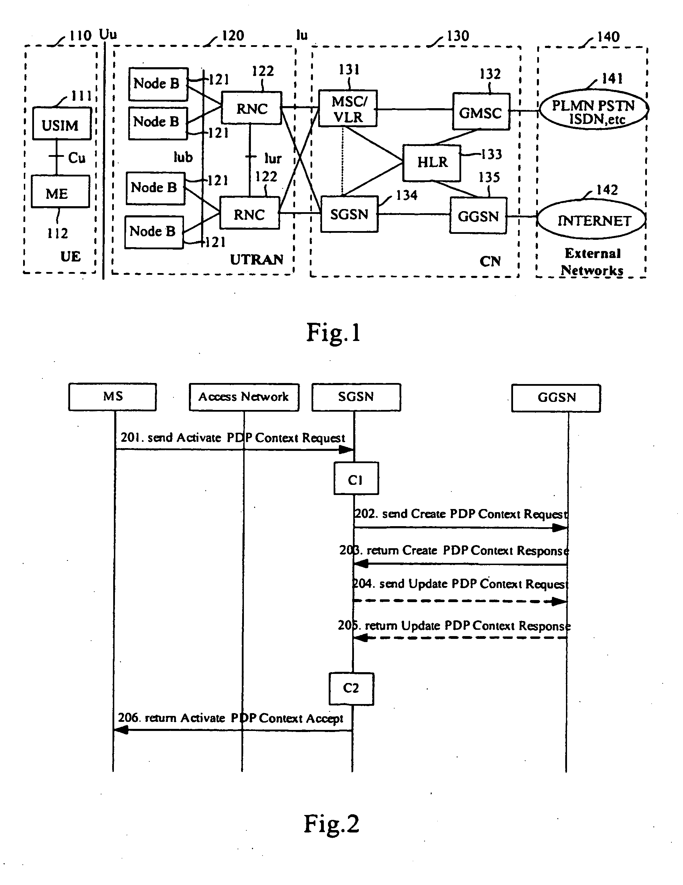

As shown in Fig. 1, which is a schematic diagram illustrating the architecture of UMTS, the system includes User Equipment (UE) 110, UMTS Terrestrial Radio Access Network (UTRAN) 120 and Core Network (CN) 140. The front-end of the UTRAN 120 connects with the UE 110 through a Uu interface, which is a wireless air interface, and the UTRAN 120 connects with the CN 140 via an Iu interface.

Here, the UE 110 consists of a Mobile Equipment (ME) and a SIM card (USIM), and the two constitute the UE 110 via a Cu electric interface.

The UTRAN 120 is used for handling all wireless-oriented functions and includes multiple base stations (Node B) 121 and multiple Radio Network Controllers (RNC) 122, wherein the RNC 122 implements control and management of the base stations.

The CN 130, which is logically divided into Circuit Switched Domain (CS) and Packet Switched Domain (PS), handles all the voice calls and data connections within the UMTS, and performs switching and routing with external networks. The CN 130 comprises: the Mobile Services Switching Center/Visitor Location Register (MSCNLR) 131 for implementing such functions as control, management, authentication and encryption in CS domain; the MSC manager (GSMC) 132 responsible for connecting with other fixed or mobile networks; the Serving GPRS Support Node (SGSN) 134 which connects with the UTRAN 120 and the Gateway GPRS Supporting Node (GGSN) 135; and the GGSN 135 which is the interface for external IP packet network 140. The external IP packet network 140 may comprise the PLMM, the PSTN, the ISDN, or the Internet.

The interface between the SGSN and the GGSN is based on GPRS Tunneling Protocol (GTP), which implements tunnel transmission function and includes the signaling plane GTP-C and the user plane GTP-U. The GTP-C implements tunnel management and transmission of other signaling messages, and the GTP-U transfers data packets of user plane. The 3GPP TS 09.60 and 3GPP TS 29.060 protocol specifications have defined the GTP, i.e. the protocol between the GPRS Support Nodes in the UMTS/GPRS backbone network, including GTP control plane protocol and data transmission protocol.

Protocols for transferring packet data in a discrete mode are generally called the Packet Data Protocol (PDP), for instance, IP protocol and X.25 protocol, which can be used for interworking between an external data network 140 and the CN 130, as well as among the CN 130 networks. A PDP context is a set of messages stored in a Mobile Station (MS) and a GPRS Support Node (GSN) for a session.

In existing UMTS/GPRS networks, the GTP protocol used for transferring signaling or data between nodes of core network in the PS domain has two versions, referred to as GTPv0 and GTPv1, respectively. The functions of these two versions are the same except that GTPv1 is the optimized and updated version of GTPv0, and the corresponding specifications thereof are 3GPP TS 09.60 (GTPv0) and 3GPP TS 29.060 (GTPv1).

A process for activating a PDP context between the SGSN and the GGSN is described in both 3GPP TS 09.60 and 3GPP TS 29.060. As shown in Fig.2, which is a flowchart illustrating the process for activating a PDP context in the prior art, the process includes following steps:
Step 201: The MS (Mobile Station) sends an Activate PDP Context Request message to the SGSN;
Step 202: The SGSN sends a Create PDP Context Request message to the GGSN;
Step 203: The GGSN returns a Create PDP Context Response message to the SGSN;
Step 204: If the QoS parameter requested by the SGSN can not be satisfied, the SGSN may modify the QoS attributes, and send an Update PDP Context Request message to the GGSN;
Step 205: The GGSN returns an Update PDP Context Response message to the SGSN according to the actual situation;
Step 206: If the returned result from the GGSN is success, then the SGSN returns an Activate PDP Context Accept message to the MS.

It should be noted that some processes, such as bearer establishment on the wireless side, are not included in the activating process of a PDP context shown in Fig.2 because they are not relevant to the present invention.

C1 and C2 shown in Fig.2 represent the possible triggering points of intelligent services, for example, the CAMEL related processes.

The messages set with dotted line in Fig.2, i.e. Step 204 and Step 205, indicate that they are optional and will be present only when certain requirement is met.

According to the specifications, when the SGSN sends a Create PDP Context Request message, the GGSN receiving this request message will return to the sender a Create PDP Context Response message after processing the message, where the most important information in the response message is the Information Element (IE) of Cause value, which indicates the result of processing after receiving the Create PDP Context Request message.

The Cause values that may be filled in the response message in version GTPv0 and version GTPv1 are not fully identical, which will be hereinafter described based on different versions, respectively.

In version GTPv0, the possible Cause values which can be filled in the response message include:
- 'Request Accepted'.
- 'No resources available'.
- 'Service not supported'.
- 'User authentication failed'.
- 'System failure'.
- 'Mandatory IE incorrect'.
- 'Mandatory IE missing'.
- 'Optional IE incorrect'.
- 'Invalid message format'.
- 'Version not supported'.

When the SGSN receives a Create PDP Context Response with the Cause value of 'Request Accepted', the SGSN activates the PDP context and starts to transfer data packets between the MS and the external packet data network.

Cause values other than 'Request Accepted' indicate that the PDP context has not been activated in the GGSN, and the specific reason can be obtained in the received Cause field.

Here, 'No resources available' refers to a temporary error, for example, all dynamic PDP addresses are occupied or no memory is available. In all the GGSNs which support GTPv0 version, 'No resources available' will be filled in the Cause field of a Create PDP Context Response message when all dynamic PDP addresses are occupied and when no memory space is available.

In GTPv1 version, the possible Cause values which can be filled in the response message include:
- "Request Accepted".
- "Context not found".
- "No resources available".
- "All dynamic PDP addresses are occupied".
- "No memory is available".
- "Missing or unknown APN".
- "Unknown PDP address or PDP type".
- "User authentication failed".
- "System failure".
- "Semantic error in the TFT operation".
- "Syntactic error in the TFT operation".
- "Semantic errors in packet filter(s)".
- "Syntactic errors in packet filters(s)".
- "Mandatory IE incorrect".
- "Mandatory IE missing".
- "Optional IE incorrect".
- "Invalid message format".
- "PDP context without TFT already activated".
- "APN access denied - no subscription".

When the SGSN receives a Create PDP Context Response with the Cause value of 'Request Accepted', the SGSN activates the PDP context and starts to transfer data packets between the MS and the external packet data network.

Cause values other than 'Request Accepted' indicate that the PDP context has not been activated in the GGSN, and the specific reason can be obtained from the received Cause value.

Here, the value "No resources available" is reserved for indicating a temporary error, for example, all dynamic PDP addresses are occupied or no memory is available. Besides, some new Cause values are added, including "Context not found", "All dynamic PDP addresses are occupied", "No memory is available", "Missing or unknown APN", and "Unknown PDP address or PDP type".

From the above description on the GTP protocol used for processing the Create PDP Context Request, it can be seen that, based on the GTPv0 version, much optimization and improvement have been made in the GTPv1 version, including adding more options of Cause value inside the response message, therefore making it possible to feedback more accurate reasons of failure to the opposite terminal, and making it easier to localize and solve the problem causing the failure. However, in practical applications, it is not well considered how to make use of these newly added Cause values and how to make them compatible with GTPv0 version, and problems arise as follows:
1. The protocol is imperfect. There are two newly added Cause values, "All dynamic PDP addresses are occupied" and "No memory is available", in the GTPv1 version, but these two values have not been used in any processing operation of the protocol;
2. Although two set values, 211 and 212, have been assigned in GTPv1 version for indicating the errors of "All dynamic PDP addresses are occupied" and "No memory is available", the value "No resources available" is still used as in the GTPv0 version. Although this makes the new version compatible with the GTPv0 version, it results in the waste of resources, for the two Cause values are not put into use though they are assigned values.
3. The existing method for processing Create PDP Context Request may easily lead to some problems in inter-working. In practical applications, each equipment provider has its own understanding of the protocols, and in case of an implementation of the GTPv1 version, it is in line with the specifications either to use the new Cause values "All dynamic PDP addresses are occupied" and "No memory is available" or to use the value "No resources available" as in the GTPv0 version. As the newly added Cause values can not be supported by GSN nodes which use the GTPv0 version, potential trouble of incompatibility exists.

US 2003/153296 A1 provides a method for transferring a tunnel from a first operating node (SGSN1) of a mobile radio communication system to a second operating node (SGSN2), when a mobile terminal is switching from the coverage area of SGSN.1 to the coverage area of SGSN2 and at least one of SGSN1, SGSN2 as well as GGSN in the mobile radio communication system being a node according to version 0 of the GTP protocol, and other being nodes according to version 1 of the GTP protocol.

### Summary of the Invention

In view of the above, the object of the present invention is to provide a method for processing Create PDP Context Request so as to avoid the problems in the interaction of messages between different GTP versions and prevent the protocol resources from being wasted.

To achieve the above object, the technical scheme of the present invention is implemented as follows:
A method for processing Create Packet Data Protocol (PDP) Context Request, comprising:
   1) storing Cause values of different versions and definitions for all the Cause values in the GSN (GPRS Support Node) receiving Create PDP Context Request messages;
   2) after receiving the Create PDP Context Request, filling a Cause value in the Create PDP Context Response according to the version number of the Create PDP Context Request;
   3) encapsulating the Create PDP Context Response with corresponding cause value therein in accordance with different GTP versions, and returning it to the sender of the Create PDP Context Request;

The Step 2) comprises as well
2A) the GSN receiving a Create PDP Context Request message;
2B) the GSN performing internal processing and getting a processing result;
2C) if the processing result is that the GSN has created a PDP context successfully, the Cause value is set as "Request Accepted";
2D) if the processing result is that the GSN fails to create a PDP context because no free dynamic PDP address is available, reading the Create PDP Context Request message and checking the version number of the message according to the message header thereof, if it is the GTPv1 version, the Cause value is set as "All dynamic PDP addresses are occupied"; otherwise, it is the GTPv0 version and the Cause value is set as "No resources available";
2E) if the processing result is that the GSN fails to create a PDP context because there is no enough memory available, reading the Create PDP Context Request message and checking the version number of the message according to the message header thereof, if it is the GTPv1 version, the Cause value is set as "No memory is available"; otherwise, it is the GTPv0 version and the Cause value is set as "No resources available";
2F) if the processing result is that the GSN fails to create a PDP context due to lack of resources other than the two above, setting the Cause value as "No resources available" without checking the version number of the Create PDP Context Request message.

The GSN may comprise a Gateway GPRS Supporting Node (GGSN) or a Serving GPRS Support Node (SGSN).

As seen from the technical scheme of the present invention, this method for processing Create PDP Context Request makes it possible to return in a Create PDP Context Response message the most suitable Cause value based on the actual situations, and feedback a more accurate reason of failure to the SGSN so as to avoid the problem that the Cause values returned by the GGSN which support different GTP versions can not be understood by the other side when the GGSN fails to activate the designated PDP context. In this way, it is convenient to localize and solve the problem causing the failed activation. At the same time, the correct use of Cause values defined in the protocol can avoid incompatibility between messages of different GTP versions and prevent the protocol resources from being wasted.

### Brief Description of the Drawings

Fig.1 is a schematic diagram illustrating the architecture of UMTS;
Fig.2 is the flowchart of the PDP context activating process in the prior art;
Fig.3 is the flowchart for processing the Create PDP Context Request in accordance with the first preferred embodiment of the present invention;
Fig.4 is the flowchart for processing the Create PDP Context Request in accordance with the second preferred embodiment of the present invention.

### Embodiments of the Invention

The present invention is described in detail hereinafter with reference to the accompanying drawings.

In accordance with the method of the present invention for processing the Create PDP Context Request, first save explicit definitions of newly added Cause values in the GTPv1 version in the GSN; then, after receiving a Create PDP Context Request message, the GSN checks the protocol version number of the Create PDP Context Request message during the processing, sets different Cause values of the corresponding version in the cause field of the Create PDP Context Response message, encapsulates the Create PDP Context Response message and sends it back to the sender.

In the first preferred embodiment of the present invention, the GSN checks the version number of the Create PDP Context Request message before the internal processing. Then, the GSN sets different Cause values of the corresponding version in the cause field of the Create PDP Context Response message according to the processing result, encapsulates the Create PDP Context Response message and sends it back to the sender.

In this embodiment, the GGSN stores explicit definitions of all the Cause values in the GTPv0 and GTPv1 versions beforehand. If the Cause value included in the Create PDP Context Response received by the SGSN is 'Request Accepted', then the SGSN activates the PDP context and starts to transfer data packets between the MS and the external packet data network.

Cause values other than the above show that the context has not been activated in the GGSN, and the specific reasons can be obtained from the received Cause values. In the GTPv1 version, "All dynamic PDP addresses are occupied" represents that the GSN has no more free dynamic PDP addresses available for the UE which initiates this activation procedure; "No memory is available" represents that there is no enough memory in the GSN to support this activation procedure; and "No resources available" represents that some kind of resources have been used up temporarily so that the activation is not supported. It should be noted that the cases represented by the Cause value "No resources available" exclude the two cases that all dynamic PDP addresses are occupied and no memory is available. The descriptions of other definitions remain unchanged, and it is not needed to make any modification in the GTPv0 version.

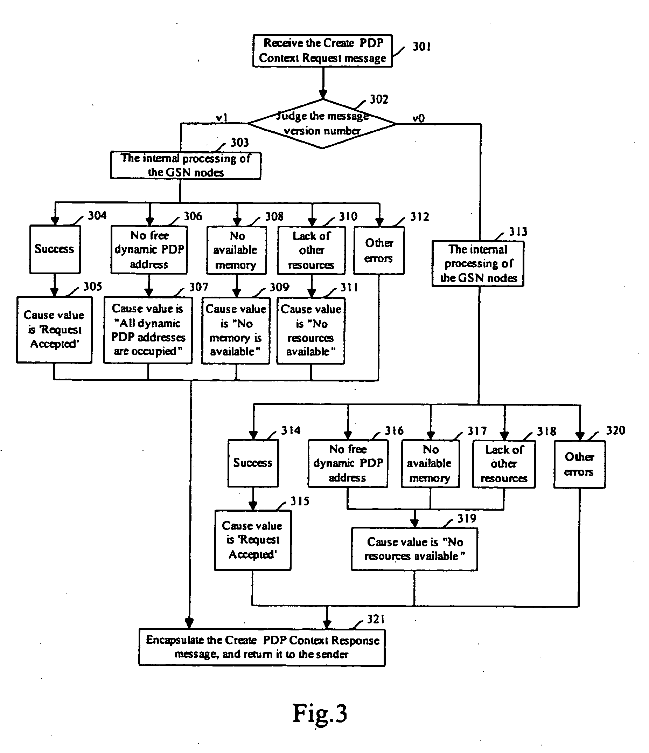

The implementing process of this embodiment is shown in Fig.3, which comprises the following steps:
Step 301: A Create PDP Context Request message is received by the GGSN.
Step 302: The GGSN reads the Create PDP Context Request message, and checks the version number of this message. There are three bits in the message header of a GTP message for defining the GTP version used by the message: 000 stands for GTPv0 while 001 for GTPv1. If the version is GTPv1, then execute Step 303; otherwise, it is GTPv0, and execute Step 313.
Step 303: The GGSN performs internal processing and gets a processing result. The processing method is the same as in the prior art.
Steps 304∼305: If the processing result is that the GGSN creates a PDP context successfully, set the Cause value as "Request Accepted" and go to Step 321.
Steps 306∼307: If the processing result is that the GGSN fails to create a PDP context because free dynamic PDP address is not available, set the Cause value as "All dynamic PDP addresses are occupied" and go to Step 321.
Steps 308∼309: If the processing result is that the GGSN fails to create a PDP context because there is no enough memory available, set the Cause value as "No memory is available", and go to Step 321.
Steps 310∼311: If the processing result is that the GGSN fails to create a PDP context due to lack of other resources, set the Cause value as "No resources available", and go to Step 321.
Step 312: If the processing result is that the GGSN fails to create a PDP context because of other errors, set the Cause value according to the description in the specifications of the existing GTPv1 version. For instance, if the GGSN does not support the specified PDP type or PDP address, set the Cause field in the response message as 'Unknown PDP address or PDP type'; if the GGSN does not support the specified Access Point Name (APN), set the Cause field in the response message as 'Missing or unknown APN', and so on. Then, go to Step 321.
Step 313: The GGSN performs internal processing and gets a processing result. The processing method is the same as in the prior art.
Steps 314∼315: If the processing result is that the GGSN creates a PDP context successfully, set the Cause value as "Request Accepted", and perform Step 321.
Steps 316∼319: If the processing result is that the GGSN fails to create a PDP context because free dynamic PDP address is not available, or because there is no enough memory available, or due to lack of other resources, set the Cause value as "No resources available", and go to Step 321.
Step 320: If the processing result is that the GGSN fails to create a PDP context because of other errors, set the Cause value according to the description in the specifications of the GTPv0 version. For instance, if the GGSN does not support the specified PDP type or PDP address or Access Point Name (APN), set the Cause field in the response message as 'Unknown PDP address or PDP type'. Then, execute Step 321.
Step 321: The GGSN encapsulates the Create PDP Context Response message, and returns it to the sender. The encapsulating method is the same as in the prior art.

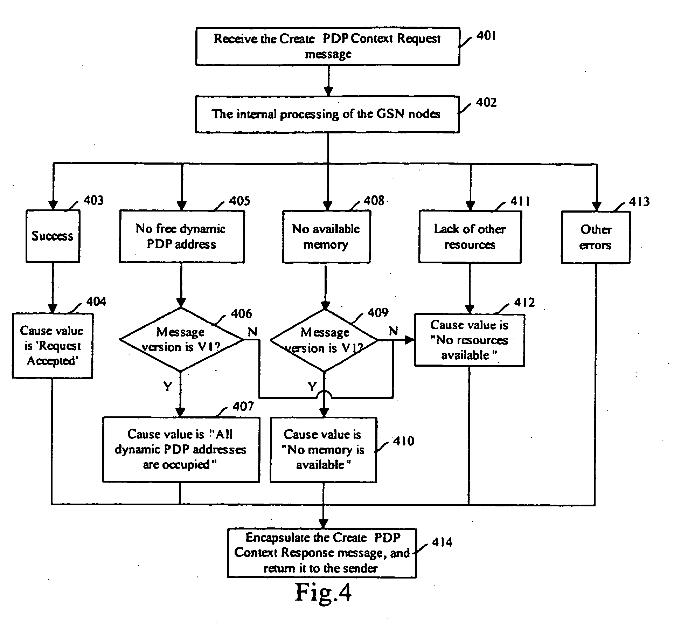

In the second preferred embodiment of the present invention, the GGSN makes internal processing and gets a processing result before checking the version number of the Create PDP Context Request message, then sets different Cause values of the corresponding version in the cause field of the Create PDP Context Response message according to the version number, encapsulates the Create PDP Context Response message, and sends it back to the sender. Similarly, in this embodiment, the GGSN stores the explicit definitions of all Cause values in the GTPv0 and GTPv1 versions beforehand. The definitions are described in the same way as in the embodiment shown in Fig.3. The implementing process of this embodiment is shown in Fig.4, which comprises the following steps:
Step 401: A Create PDP Context Request message is received by the GGSN.
Step 402: The GGSN makes internal processing and gets a processing result. The processing method is the same as in the prior art.
Steps 403∼404: If the processing result is that the GGSN creates a PDP context successfully, set the Cause value as "Request Accepted" and go to Step 414.
Steps 405∼406: If the processing result is that the GGSN fails to create a PDP context because free dynamic PDP address is not available, then read the Create PDP Context Request message and check the version number of this message. The checking method is the same as in the embodiment shown in Fig.3. If the version is GTPv1, then execute Step 407; otherwise, it is GTPv0, and execute Step 412.
Step 407: Set the Cause value as "All dynamic PDP addresses are occupied" and go to Step 414.
Steps 408∼409: If the processing result is that the GGSN fails to create a PDP context because there is no enough memory available, then read the Create PDP Context Request message and check the version number of this message. The checking method is the same as in the embodiment shown in Fig.3. If the version is GTPv1, then execute Step 410; otherwise it is GTPv0, and execute Step 412.
Step 410: Set the Cause value as "No memory is available" and go to Step 414.
Step 411: If the processing result is that the GGSN fails to create a PDP context due to lack of other resources, go to Step 412.
Step 412: Set the Cause value as "No resources available" and go to Step 414.
Step 413: If the processing result is that the GGSN fails to create a PDP context because of other errors, then check the version number and set the Cause value according to the version number, i.e. set the Cause value according to the description in the specifications of the existing GTPv0 or GTPv1 version, and then go to Step 414.
Step 414: The GGSN encapsulates the Create PDP Context Response message, and returns it to the sender.

In the two embodiments above, the Create PDP Context Response message is generated by the GGSN after the received Create PDP Context Request message is processed. In practical applications, it can also be the SGSN that processes the received Create PDP Context Request message and generates the Create PDP Context Response message.

As seen in the above two embodiments, the method for processing Create PDP Context Request in accordance with the present invention avoids the possible incompatibility in practical applications, thus applicable to a wider scope, and prevents protocol resources from being wasted. At the same time, specific error reasons based on different processing results can be returned, and it becomes easier in practical applications to locate and solve the problems which cause activation failure. Moreover, it is unnecessary to make any modifications in the existing GTPv0 version, which makes the method highly compatible.

## Claims

1. A method for processing Create Packet Data Protocol, PDP, Context Request, the method comprising:
1) storing Cause values of different versions as well as definitions for all the Cause values in a GSN, GPRS Support Node, receiving a Create PDP Context Request message;
2) after receiving the Create PDP Context Request, filling a Cause value in a Create PDP Context Response according to the version number of the Create PDP Context Request (404, 407, 410, 412);
3) encapsulating the Create PDP Context Response with corresponding cause value therein in accordance with different GTP versions, and returning it to the sender of the Create PDP Context Request (414);
**characterised in that** the Step 2) comprises:
2A) the GSN receiving the Create PDP Context Request message (401);
2B) the GSN performing internal processing and getting a processing result (402);
2C) if the processing result is that the GSN has created a PDP context successfully, the Cause value is set as "Request Accepted" (403, 404);
2D) if the processing result is that the GSN fails to create a PDP context because no free dynamic PDP address is available, reading the Create PDP Context Request message and checking the version number of the message according to the message header thereof (405, 406), if it is the GTPv1 version, the Cause value is set as "All dynamic PDP addresses are occupied" (407); otherwise, it is the GTPv0 version, and the Cause value is set as "No resources available" (412);
2E) if the processing result is that the GSN fails to create a PDP context because there is no enough memory available, reading the Create PDP Context Request message and checking the version number of the message according to the message header thereof (408, 409), if it is the GTPv1 version, the Cause value is set as "No memory is available" (410); otherwise, it is the GTPv0 version, and the Cause value is set as "No resources available" (412);
2F) if the processing result is that the GSN fails to create a PDP context due to lack of resources other than the two above, setting the Cause value as "No resources available" without checking the version number of the Create PDP Context Request message.

2. The processing method according to claim 1 **characterized in that** the GSN comprises a Gateway GPRS Supporting Node (GGSN) or a Serving GPRS SupportNode (SGSN).

## Patentansprüche

1. Verfahren zum Verarbeiten einer Anforderung zur Erzeugung eines Paketdatenprotokoll (PDP)-Kontexts, wobei das Verfahren Folgendes aufweist:
1) Speichern von Ursachenwerten bzw. Verursacherwerten unterschiedlicher Versionen sowie Definitionen für alle Ursachenwerte in einem GSN (GPRS Support Node), welches eine Nachricht zur Anforderung zur Erzeugung eines PDP-Kontexts empfängt;
2) nach dem Empfangen der Anforderung zur Erzeugung eines PDP-Kontexts Füllen eines Ursachenwertes in eine Antwort zur Erzeugung eines PDP-Kontexts gemäß der Versionsnummer der Anforderung zur Erzeugung eines PDP-Kontexts (404, 407, 410, 412);
3) Einkapseln der Antwort zur Erzeugung eines PDP-Kontexts mit einem entsprechenden Ursachenwert in derselben gemäß unterschiedlichen GTP-Versionen und Rücksenden derselben an den Sender der Anforderung zur Erzeugung eines PDP-Kontexts (414);
**dadurch gekennzeichnet, dass** Schritt 2) Folgendes aufweist:
2A) das GSN, welches die Nachricht zur Anforderung zur Erzeugung eines PDP-Kontexts empfängt (401);
2B) das GSN, welches die interne Verarbeitung durchführt und ein Verarbeitungsergebnis erhält (402);
2C) wenn das Verarbeitungsergebnis ist, dass das GSN einen PDP-Kontext erfolgreich erzeugt hat, Einstellen des Ursachenwertes als "Anforderung angenommen" (403, 404);
2D) wenn das Verarbeitungsergebnis ist, dass das GSN keinen PDP-Kontext erzeugen kann, weil keine freie, dynamische PDP-Adresse verfügbar ist, Lesen der Nachricht zur Anforderung zur Erzeugung eines PDP-Kontexts und Überprüfen der Versionsnummer der Nachricht gemäß des Kopfzeile derselben (405, 406); wenn es die GTPv1-Version ist, Einstellen des Ursachenwertes als "alle dynamischen PDP-Adressen sind besetzt" (407); andernfalls ist es die GTPv0-Version und der Ursachenwert wird als "keine Betriebsmittel verfügbar" eingestellt (412);
2E) wenn das Verarbeitungsergebnis ist, dass das GSN keinen PDP-Kontext erzeugen kann, weil nicht genügend Speicher verfügbar ist, Lesen der Nachricht zur Anforderung zur Erzeugung eines PDP-Kontexts und Überprüfen der Versionsnummer der Nachricht gemäß der Nachrichtenkopfzeile derselben (408, 409); wenn es die GTPv1-Version ist, Einstellen des Ursachenwertes als "kein Speicher verfügbar" (410); andernfalls ist es CA GTPv0-Version und der Ursachenwert wird als "keine Betriebsmittel verfügbar" eingestellt (412);
2F) wenn das Verarbeitungsergebnis ist, dass das GSN aufgrund eines Mangels an anderen Betriebsmitteln als den zwei oben Genannten keinen PDP-Kontext erzeugen kann, Einstellen des Ursachenwertes als "kein Betriebsmittel verfügbar" ohne Überprüfen der Versionsnummer der Nachricht zur Anforderung zur Erzeugung eines PDP-Kontexts.

2. Verarbeitungsverfahren nach Anspruch 1, **dadurch gekennzeichnet, dass** das GSN ein Gateway GPRS Supporting Node (GGSN) oder ein Serving GPRS Support Node (SGSN) aufweist.

## Revendications

1. Procédé de traitement de Demande de Création de Contexte de Protocole de Données par Paquet, PDP, le procédé comprenant les étapes consistant à :
1) stocker des valeurs de Cause de versions différentes aussi bien que des définitions pour toutes les valeurs de Cause dans un GSN, Noeud de Support GPRS, recevant un message de Demande de Création de Contexte PDP ;
2) après la réception de la Demande de Création de Contexte PDP, remplir une valeur de Cause dans une Réponse de Création de Contexte PDP selon le numéro de version de la Demande de Création de Contexte PDP (404, 407, 410, 412) ;
3) encapsuler la Réponse de Création de Contexte PDP avec une valeur de cause correspondante en son sein selon différentes versions GTP, et la renvoyer à l'expéditeur de la Demande de Création de Contexte PDP (414) ;
**caractérisé en ce que** l'Étape 2) comprend :
2A) le GSN recevant le message de Demande de Création de Contexte PDP (401) ;
2B) le GSN exécutant un traitement interne et obtenant un résultat de traitement (402) ;
2C) si le résultat de traitement est que le GSN a créé un contexte PDP avec succès, la valeur de Cause est mise à « Demande Acceptée » (403, 404) ;
2D) si le résultat de traitement est que le GSN échoue à créer un contexte PDP parce qu'aucune adresse PDP dynamique libre n'est disponible, en lisant le message de Demande de Création de Contexte PDP et en vérifiant le numéro de version du message selon son en-tête de message (405, 406), si c'est la version GTPv1, la valeur de Cause est mise à « Toutes les adresses PDP dynamiques sont occupées » (407) ; autrement, si c'est la version GTPv0, la valeur de Cause est mise à « Aucune ressource disponible » (412) ;
2E) si le résultat de traitement est que le GSN échoue à créer un contexte PDP parce qu'il n'y a pas assez de mémoire disponible, en lisant le message de Demande de Création de Contexte PDP et en vérifiant le numéro de version du message selon son en-tête de message (408, 409), si c'est la version GTPv1, la valeur de Cause est mise à « Pas de mémoire disponible » (410) ; autrement, si c'est la version GTPv0, la valeur de Cause est mise à « Aucune ressource disponible » (412) ;
2F) si le résultat de traitement est que le GSN échoue à créer un contexte PDP en raison du manque de ressources autres que les deux raisons précédentes, la valeur de Cause est mise à « Aucune ressource disponible » sans vérifier le numéro de version du message de Demande de Création de Contexte PDP.

2. Procédé de traitement selon la revendication 1, **caractérisé en ce que** le GSN comprend un Noeud de Service GPRS de Transit (GGSN) ou un Noeud de Support GPRS de Service (SGSN).
